(19) Europäisches Patentamt
European Patent Office
Office européen des brevets

(11) **EP 3 737 525 B1**

(12) **EUROPÄISCHE PATENTSCHRIFT**

(45) Veröffentlichungstag und Bekanntmachung des Hinweises auf die Patenterteilung:
**09.08.2023   Patentblatt 2023/32**

(21) Anmeldenummer: **19702182.7**

(22) Anmeldetag: **09.01.2019**

(51) Internationale Patentklassifikation (IPC):
**B23K 9/133** (2006.01)

(52) Gemeinsame Patentklassifikation (CPC):
**B23K 9/133**

(86) Internationale Anmeldenummer:
**PCT/EP2019/050414**

(87) Internationale Veröffentlichungsnummer:
**WO 2019/137945 (18.07.2019 Gazette 2019/29)**

(54) **VERFAHREN ZUM ZUFÜHREN EINES SCHWEISSDRAHTES IN EINEN SCHWEISSBRENNER**

METHOD OF FEEDING A WELDING WIRE INTO A WELDING TORCH

METHODE D'INTRODUCTION D'UN FIL DE SOUDAGE DANS UNE TORCHE DE SOUDAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2018   EP 18151210**

(43) Veröffentlichungstag der Anmeldung:
**18.11.2020   Patentblatt 2020/47**

(73) Patentinhaber: **FRONIUS INTERNATIONAL GmbH**
**4643 Pettenbach (AT)**

(72) Erfinder:
• **LEONHARTSBERGER, Andreas**
**4643 Pettenbach (AT)**
• **HABERLER, Wolfgang**
**4643 Pettenbach (AT)**
• **PLATZER, Daniel**
**4643 Pettenbach (AT)**
• **OBERNDORFER, Klaus**
**4643 Pettenbach (AT)**

(74) Vertreter: **Patentanwälte Pinter & Weiss OG**
**Prinz-Eugen-Straße 70**
**1040 Wien (AT)**

(56) Entgegenhaltungen:
EP-A1- 3 088 117      JP-A- H11 342 471
JP-U- S5 680 877      JP-U- S55 143 978
US-A- 4 074 105       US-A1- 2009 152 255

**Beschreibung**

Die gegenständliche Erfindung betrifft ein Verfahren zum Zuführen eines Schweißdrahtes in einen Schweißbrenner mit Kontakthülse, wobei der Schweißdraht durch den Schweißbrenner und die Kontakthülse geführt wird.

Schweißverfahren mit abschmelzender Elektrode sind hinlänglich bekannt. Hierbei ist es auch bekannt, den Schweißdraht selbst als Elektrode zu verwenden, indem der Schweißdraht mit einer Schweißdrahtvorschubeinheit einem Schweißbrenner zugeführt wird, in dem eine Kontakthülse angeordnet ist, die auf ein elektrisches Potential gebracht wird. Der Schweißdraht kontaktiert die Kontakthülse beim Vorschub durch den Schweißbrenner, womit ein elektrischer Schweißstrom über die Kontakthülse durch den Schweißdraht fließen kann, wenn der elektrische Schweißkreis über den sich ausbildenden Schweißlichtbogen zwischen Schweißdraht und zu schweißendem Werkstück (das in der Regel auf Massepotential liegt) geschlossen wird. Beispiele für solche Schweißverfahren sind das Metallinertgasschweißen (MIG) und das Metallaktivgasschweißen (MAG), bei denen der Schweißstelle zusätzlich noch ein Schutzgas zugeführt wird.

Ein wesentlicher Faktor für die Qualität der Schweißung ist in solchen Schweißverfahren der Kontakt zwischen Kontakthülse und Schweißdraht. Hierbei ist zum einen eine ausreichend hohe Kontaktkraft erforderlich, um eine sichere elektrische Kontaktierung zu erreichen. Außerdem soll der Kontaktpunkt zwischen Schweißdraht und Kontakthülse möglichst gleich bleiben. Variiert die Kontaktkraft und/oder der Kontaktpunkt kann es zu einer unkontrollierten Schwankung des Kontaktwiderstandes kommen, was wiederum eine unkontrollierte Schwankung des fließenden Schweißstromes und des Schweißlichtbogens bewirkt. Das verschlechtert die Qualität der Schweißung.

Für die Kontaktierung ist in erster Linie die Zuführung des Schweißdrahtes in die Kontakthülse entscheidend. Der Schweißdraht ist üblicherweise auf einer Schweißdrahtrolle oder in einem Schweißdrahtfass aufgewickelt und wird dem Schweißbrenner über eine Schweißdrahtvorschubeinheit zugeführt. Durch die Wicklung des Schweißdrahtes hat der Schweißdraht eine bestimmte Dressur, also einen bestimmten Biegungszustand. Darüber hinaus kann auch durch das Schlauchpaket, durch das der Schweißdraht dem Schweißbrenner zugeführt wird, die Dressur geändert werden, da das Schlauchpaket in beliebiger Lage liegen kann. Durch die unkontrollierte Dressur und Lage (Ausrichtung) des Schweißdrahtes kann der Kontaktpunkt und die Kontaktkraft des Schweißdrahtes im Schweißbrenner nicht kontrolliert werden, woraus sich die oben genannten Probleme ergeben können. Nicht zuletzt kann auch die relative Position des Schweißbrenners zum Schlauchpaket die Ausrichtung des Schweißdrahtes in der Kontakthülse ändern. Das ist insbesondere der Fall, wenn der Schweißbrenner auf einem Schweißroboter angeordnet ist und der Schweißroboter zum Schweißen die räumliche Lage des Schweißbrenners ändert.

Daher werden nach dem Stand der Technik bereits Drahtformungseinheiten verwendet, um die Dressur des Schweißdrahtes zu ändern. Dazu ist eine plastische Verformung des Schweißdrahtes erforderlich, um dem Schweißdraht eine andere Dressur zu geben.

Die DE 1 923 995 A1 beschreibt beispielsweise eine Vorrichtung zum Geraderichten des Schweißdrahtes vor der Schweißdrahtvorschubeinheit. Diese Vorrichtung besteht aus drei Rollen, wobei zwei außenliegende Rollen an der Längsachse des Schweißdrahtes ausgerichtet sind und eine dritte, dazwischen angeordnete Rolle in Querrichtung zur Längsachse verschoben ist, sodass dem Schweißdraht beim Durchlaufen durch die Vorrichtung eine Krümmung aufgeprägt wird. Zusätzlich wird die Vorrichtung um die Längsrichtung rotiert. Die eingebrachte Krümmung durch die Rollen und die Rotation der Rollen soll die Krümmung des Schweißdrahtes auf der Schweißdrahtrolle ausgleichen und den Schweißdraht gerade richten. Das Problem hierbei ist, dass der Schweißdraht im Schlauchpaket, das durchaus sehr lange sein kann, wieder eine unkontrollierte Dressur erfahren kann, womit man die Kontaktierung in einer Kontakthülse nicht sicher verbessern kann. Die Drahtdressur passt sich der geringsten erforderlichen Biegearbeit im Schlauchpaket an und steht damit in keinem Bezug zum Schweißbrenner. Dadurch kann trotz einer erzielten geringeren Drahtdressur weder vorhergesagt werden wie der Schweißdraht aus dem Schweißbrenner austritt, was die Position der Schweißung unbestimmt macht, noch kann der Kontaktpunkt des Schweißdrahtes in der Kontakthülse vorhergesagt werden, was die Kontaktierung unbestimmt macht.

Eine ähnliche Vorrichtung zur Drahtformung zeigt die US 4,074,105 A, die in diesem Fall näher am Schweißbrenner angeordnet ist. Durch die Rotation der Drahtformungseinheit wird gezielt eine Dressur in den Schweißdraht eingebracht, die dazu führt, dass der aus dem Schweißbrenner austretende Schweißdraht spiralförmig rotiert. Die selbe Rotation führt der Schweißbrenner auch in der Kontakthülse aus, womit der Kontaktpunkt in der Kontakthülse nicht gleichbleibend ist und wieder die oben angesprochenen Probleme mit der Kontaktierung in der Kontakthülse auftreten können.

Daneben sind noch Schweißbrenner bekannt, in denen eine Führungseinrichtung angeordnet ist, um den Schweißdraht im Schweißbrenner zu führen und auszurichten. Ein Beispiel hierfür ist die DE 298 80 112 U1, die einen Schweißbrenner zeigt, in dem ein Übergangsstück angeordnet ist, in dem der mit einer bestimmten Dressur zugeführte Schweißdraht gerade gerichtet wird. Das Ausmaß des Geraderichtens wird dabei über die Länge des Übergangsstückes beeinflusst und kann erhebliche Gleitreibungskräfte bewirken. Durch das Geraderichten des Schweißdrahtes vor der Kontakthülse erreicht man zwar ein leichteres Einführen des Schweißdrahtes, aber eine sichere Kontaktierung kann damit nicht erzielt werden, da der Kontaktpunkt in der Kontakthülse dadurch unbestimmt ist. Hohe Gleitreibungskräfte machen höhere Drahtvorschubkräfte erforderlich und die Förderung des Schweißdrahtes kann nur mit beschränkter Drahtförderfrequenz erfolgen.

Die US 2009/0152255 A1 zeigt einen Schweißbrenner mit Kontakthülse mit dem eine sichere gleichbleibende Kontaktierung in der Kontakthülse trotz sich ändernder Dressur des zugeführten Schweißdrahtes und trotz eines möglichen Kippens oder Drehens des Schweißdrahtes im Schweißbrenner (aufgrund einer Bewegung des Schweißbrenners) erreicht werden kann. Das wird dadurch erreicht, dass im Schweißbrenner drei Biegestellen für den Schweißdraht vorgesehen sind. Eine Biegestelle ist eine Stelle an der der Schweißdraht an einem Teil im Schweißbrenner anliegt. Die Biegestellen fungieren damit für den Schweißdraht als Auflager, an denen der Schweißdraht vorbeigeführt wird. Die Biegestellen sind quer zur Längsrichtung zueinander versetzt, sodass der Schweißdraht beim Durchführen durch den Schweißbrenner eine Biegung erfährt. Wesentlich dabei ist, dass die dritte Biegestelle in der Kontakthülse ausgebildet ist, womit die Kontaktkraft unabhängiger von einer Dressur des zugeführten Schweißdrahtes sein soll. Dadurch dass der dritte Biegepunkt in der Kontakthülse ausgebildet ist, kann die Kontaktkraft zwar erhöht und die Kontaktierung verbessert werden, aber es entstehen dadurch relativ hohe Reibungskräfte zwischen Schweißdraht und Kontakthülse, was wiederum die benötigte Vorschubkraft für den Schweißdraht zum Fördern durch den Schweißbrenner erhöht. Schweißprozesse mit hochdynamischer Drahtförderung sind damit kaum ausführbar. Außerdem kann mit dieser Drahtformung zwar ein Kontaktpunkt in der Kontakthülse mit hoher Kontaktkraft erreicht werden, die genaue Lage des Kontaktpunktes kann damit aber nur schwer, wenn überhaupt, kontrolliert werden, da die Krümmungsrichtung des Schweißdrahtes unbestimmt bleibt.

Die EP 3 088 117 A1 zeigt eine Vorrichtung zum Geraderichten des Schweißdrahtes vor dem Schweißbrenner. Die Vorrichtung umfasst zwei Rollengruppen mit jeweils fünf versetzt zu einander angeordneten Rollen zwischen denen der Schweißdraht zickzack-förmig durchgeführt wird. Die Drehachsen der Rollen der beiden Rollengruppen sind zusätzlich um 90° zueinander versetzt. In den Rollengruppen kommt es jeweils zu drei Umlenkungen des Schweißdrahtes, um den Schweißdraht gerade zu richten. Diese Vorrichtung ist für eine sichere Kontaktierung einer Kontakthülse mit dem Schweißdraht im Schweißbrenner an sich ungeeignet, weil der Schweißdraht eine definierte Krümmung benötigt, um die Lage des Kontaktpunktes und die Kontaktkraft in der Kontakthülse zu bestimmen. Zudem ist die Vorrichtung zum Geraderichten vor dem Schweißbrenner auf einem Schweißroboter angeordnet, sodass dem Schweißdraht zwischen der Vorrichtung und dem Schweißbrenner durch die Bewegung des Roboterarmes wieder unkontrolliert eine Dressur aufgeprägt werden kann. Auch deshalb wäre damit kein zuverlässiger Kontaktpunkt oder eine zuverlässige Kontaktkraft in einer Kontakthülse eines Schweißbrenners möglich.

Die JP H11 342471 A zeigt eine Drahtformungseinheit mit drei Rollen, über die ein Schweißdraht geführt wird, um dem Schweißdraht eine bestimmte Dressur einzuprägen, sodass der Schweißdraht in einem flachen Winkel zu einer Schweißstelle zugeführt werden kann. Eine Kontaktierung des Schweißdrahtes in einer Kontakthülse wird in dieser Schrift nicht angestrebt.

Es ist daher eine Aufgabe der gegenständlichen Erfindung durch eine sichere gleichbleibende Kontaktierung des Schweißdrahtes in einer Kontakthülse die Schweißqualität zu verbessern und gleichzeitig die Reibungskräfte für die Drahtformung zu reduzieren.

Diese Aufgabe wird durch die Merkmale von Anspruch 1 gelöst. Durch die Kugellagerung werden die Reibkräfte in der Drahtformungseinheit weitestgehend minimiert. Durch den vorgegebenen Achsabstand wird zum einen erreicht, dass die benötigte Dressur mit geringem Querversatz erreicht werden kann, was die Baugröße reduziert. Gleichzeitig kann damit sichergestellt werden, dass die notwendigen Umlenkungen an den beiden äußeren Rollen für den weiteren Transport des Schweißdrahtes nichts so groß werden, dass durch eine unerwünschte weitere plastische Verformung die Dressur an der mittleren Rolle zum Teil oder zur Gänze wieder aufgehoben wird.

Für ein optimales Ergebnis der Dressur wird der Querversatz abhängig vom Schweißdraht, vorzugsweise abhängig vom Schweißdrahtdurchmesser und/oder Schweißdrahtmaterial, eingestellt.

Wenn zumindest eine Rolle an zwei nebeneinander angeordneten Kugellagern gelagert ist, können die Lagerkräfte reduziert werden, was es wiederum ermöglich kleinere Kugellager einzusetzen. Damit kann die Baugröße der Drahtformungseinheit weiter reduziert werden.

In einem Schweißbrenner mit Kontakthülse ist die Drahtformungseinheit in einer definierten und fixierten Einbaulage relativ zum Schweißbrenner angeordnet. Damit kann eine definierte Orientierung des dressierten Schweißdrahtes im Schweißbrenner sichergestellt werden, womit die Kontaktierung des Schweißdrahtes in einer Kontakthülse verbessert werden kann. Zusätzlich wird ein sogenannter Tool Center Point (TCP) definiert eingestellt, sodass eine gleichbleibende Schweißqualität gewährleistet ist. Es resultiert also ein stabiler Lichtbogen, welcher zwischen Schweißdrahtende und TCP am Werkstück brennt, aufgrund der gleichbleibend definierten Position von Schweißdrahtende und TCP während eines Schweißprozesses.

Der Schweißbrenner kann einen Brennergrundkörper umfassen und die Drahtformungseinheit kann im Brennergrundkörper angeordnet sein. Wenn der Brennergrundkörper eine Drahtvorschubeinheit umfasst oder als Drahtvorschubeinheit ausgeführt ist kann die Drahtformungseinheit vorteilhafterweise auch in der Drahtvorschubeinheit angeordnet sein.

Der Schweißbrenner kann einen Brennerhals umfassen, an dessen freiem Ende einer Brennerkopf mit der Kontakthülse angeordnet ist und der mit dem andere Ende über ein Anschlussstück an einem Brennergrundkörper oder einem Schlauchpaket verbunden ist und die Drahtformungseinheit kann im Brennerhals oder im Anschlussstück angeordnet sein. Der Schweißbrenner kann über eine Schlauchpaketkupplung mit einem Schlauchpaket verbunden sein und die Drahtformungseinheit kann in der Schlauchpaketkupplung angeordnet sein.

Am Schweißbrenner kann ein Roboterverbindungsstück zu einem Schweißroboter angeordnet sein und die Drahtformungseinheit kann in diesem Roboterverbindungsstück angeordnet sein.

Damit kann die Drahtformungseinheit aufgrund der geringen Baugröße in vielfältiger Weise in einem Schweißbrenner angeordnet werden, was einen sehr flexiblen Einsatz ermöglicht. Die gegenständliche Erfindung wird nachfolgend unter Bezugnahme auf die Figuren 1 bis 8 näher erläutert.

Dabei zeigt

Fig. 1 und 2 jeweils einen Schnitt durch eine vorteilhafte Ausgestaltung einer Drahtformungseinheit nach dem erfindungsgemäßen Verfahren,
Fig.3 die Erzeugung des gewünschten Dressur durch den Achsabstand und Querversatz der Rollen der Drahtformungseinheit,
Fig.4 die erzielte Dressur eines Schweißdrahtes in der Drahtformungseinheit,
Fig.5 eine beispielshafte Anordnung der Drahtformungseinheit in einem Schweißbrenner,
Fig.6 weitere mögliche Einbauorte der Drahtformungseinheit in einem Schweißbrenner,
Fig.7 und 8 mögliche Ausführungen einer kugelgelagerten Rolle in der Drahtformungseinheit.

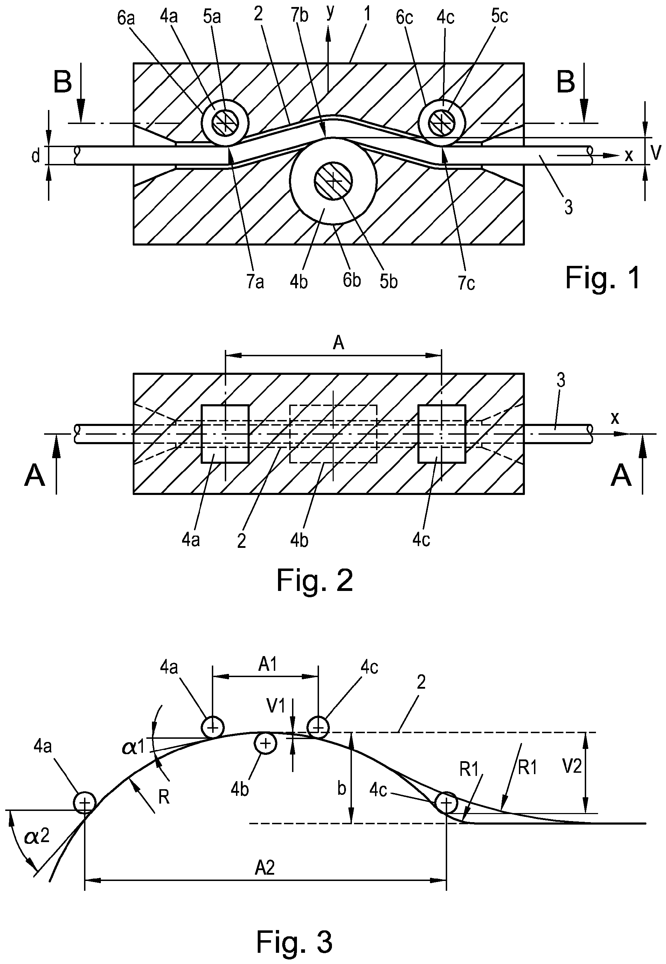

In Fig.1 ist ein Schnitt durch eine Drahtformungseinheit 1 des erfindungsgemäßen Verfahrens in Seitenansicht (Schnitt A-A) dargestellt und in Fig.2 die Drahtformungseinheit 1 in einem Schnitt in Draufsicht (Schnitt B-B). In der Drahtformungseinheit 1 ist ein durchgehender Kanal 2 zum Durchführen eines Schweißdrahtes 3 in Längsrichtung x (angedeutet durch den Bewegungspfeil), die im Wesentlichen der Bewegungsrichtung des Schweißdrahtes 3 entspricht, vorgesehen. Der Kanal 2 kann aber natürlich auch deutlich größer ausgeführt sein, als in Fig.1 und 2 dargestellt. Beispielsweise könnte die Drahtformungseinheit 1 als hohles Gehäuse ausgebildet sein, wobei der gesamte Hohlraum den Kanal 2 ausbildet. Für das Einfädeln des Schweißdrahtes 3 kann es allerdings vorteilhaft sein, den Schweißdraht 3 in einem engen Kanal 2 zu führen. Der Kanal 2 ist auf jeden Fall vorzugsweise so groß ausgebildet, dass der Schweißdraht 3 bei der Durchführung eine Kanalwand des Kanals 2 an keiner Stelle berührt, um allfällige Reibkräfte zu vermeiden.

In der Drahtformungseinheit 1 sind ferner drei Rollen 4a, 4b, 4c in Längsrichtung x nebeneinander angeordnet, über die der Schweißdraht 3 geführt ist. Die drei Rollen 4a, 4b, 4c sind in der Drahtformungseinheit 1 durch Kugellager 5a, 5b, 5c kugelgelagert drehbar angeordnet. Der Schweißdraht 3 liegt an Abrollflächen 6a, 6b, 6c der Rollen 4a, 4b, 4c an. Hierzu sind die beiden in Längsrichtung x gesehen äußeren Rollen 4a, 4c und die dazwischen liegende mittlere Rolle 4b in Querrichtung y quer zur Längsrichtung x versetzt zueinander angeordnet, sodass der Schweißdraht 3 zwischen den Abrollflächen 6a, 6c der beiden äußeren Rollen 4a, 4c und der Abrollfläche 6b der mittleren Rolle 4b durchgeführt wird. Durch den Querversatz V der mittleren Rolle 4b in Richtung zu den beiden äußeren Rollen 4a, 4c ergibt sich ein zickzack-förmiger Pfad des Schweißdrahtes 3 durch die Drahtformungseinheit 1 mit drei Umlenkpunkten 7a, 7b, 7c, an denen der Schweißdraht 3 umgeformt wird. Der erste Umlenkpunkt 7a ergibt sich zwischen der ersten Rolle 4a und dem Schweißdraht 3, der zweite Umlenkpunkt 7b zwischen der zweiten Rolle 4b und dem Schweißdraht 3 und der dritte Umlenkpunkt 7b zwischen der ersten Rolle 4a und dem Schweißdraht 3. Durch den Querversatz V sind die Umlenkpunkte 7a, 7c der beiden äußeren Rollen 4a, 4c und der Umlenkpunkt 7b der mittleren Rolle 4b einander zugewandt angeordnet. An jeden Umlenkpunkt 7a, 7b, 7c wird der Schweißdraht 3 hintereinander in jeweils anderer Richtung umgebogen, wodurch sich der zickzack-förmige Pfad ergibt, und erfährt dadurch eine plastische Verformung, die dem Schweißdraht 3 die gewünschte Dressur, also einen in engen Grenzen definierten Krümmungsradius, gibt. Die durch die Vorkrümmung unbestimmte Drahtdressur des Schweißdrahtes 3 vor der Drahtformungseinheit 1 wird aufgrund der plastischen Verformung in der Drahtformungseinheit 1 in definierter Weise reduziert und hat damit nur einen geringen Einfluss auf die Krümmung des Schweißdrahtes 3 nach der Drahtformungseinheit 1.

Der Querversatz V wird von einer Neutrallage (in Fig.1 strichliert angedeutet) des Schweißdrahtes 3 weg gemessen, bei der der Schweißdraht 3 zwar an den Abrollfläche 6a, 6b, 6c der drei Rollen 4a, 4b, 4c anliegt, aber in Querrichtung y nicht verformt wird - der Schweißdraht 3 würde in der Neutrallage somit in Längsrichtung x gerade durch die Drahtformungseinheit 1 durchlaufen, ohne an den Umlenkpunkten 7a, 7b, 7c verbogen zu werden. Durch den Querversatz V der mittleren Rolle 4b in Richtung zu den beiden äußeren Rollen 4a, 4c ergibt sich der zickzack-förmige Pfad des Schweißdrahtes 3 durch die Drahtformungseinheit 1.

Die notwendige plastische Verformung zur gewünschten Dressur des Schweißdrahtes 3 wird über den Querversatz V der mittleren Rolle 4b eingestellt. Je größer der Querversatz V ist, umso größer wird die Krümmung des über die mittlere Rolle 4b laufenden Schweißdrahtes 3. Für eine plastische Verformung ist eine bestimmte Grenzkrümmung notwendig, um die Elastizitätsgrenze zu überschreiten. Diese Grenzkrümmung hängt in erster Linie vom Durchmesser des Schweißdrahtes 3 und/oder vom Schweißdrahtmaterial ab und kann als bekannt vorausgesetzt werden. Daraus folgt aber unmittelbar, dass der Querversatz V für verschiedene Schweißdrahtdurchmesser und/oder verschiedene Schweißdrahtmaterialien angepasst werden sollte, um die gewünschte Dressur sicher zu erreichen. Das kann erfolgen, indem die mittlere Rolle 4b in Querrichtung y verstellbar angeordnet ist oder indem für verschiedene Schweißdrähte 3 verschiedene Drahtformungseinheiten 1 vorgesehen sind. Im letzteren Fall sind die äußeren Abmessungen der Drahtformungseinheit 1 vorzugsweise gleich.

Um die für die plastische Verformung notwendige Krümmung zu erreichen, ist der Achsabstand A in Längsrichtung x zwischen den Drehachsen der beiden äußeren Rollen 4a, 4c maximal 35mm, vorzugsweise maximal 30mm, und gemäß der Erfindung maximal 20mm. Dieser maximale Achsabstand A ist wichtig weil erkannt wurde, dass zwar ein größerer Achsabstand möglich wäre, das aber zu erheblichen Nachteilen führen würde, wie anhand von Fig.3 erläutert wird. In Fig.3 ist eine erste Rollenanordnung mit den drei Rollen 4a, 4b, 4c angedeutet, wobei die beiden äußeren Rollen 4a, 4c einen ersten Achsabstand A1 aufweisen. Um die notwendige Krümmung (Krümmungsradius R) des Schweißdrahtes 3 einzustellen ist ein erster Querversatz V1 erforderlich. Daraus folgt ein Winkel $\alpha1$ zwischen der Längsrichtung x und dem Schweißdraht 3 an einer der äußeren Rolle 4a, 4c. Wird nun der Achsabstand erhöht ist ein größerer Querversatz V2 notwendig, um die gleiche Krümmung (Krümmungsradius R) des Schweißdrahtes 3 einzustellen. Daraus folgt auch ein größerer Winkel $\alpha2$ zwischen einer äußeren Rolle 4a, 4c und der Längsrichtung x. Durch den größeren Achsabstand A2 und dem größeren Querversatz V2 hätte die Drahtformungseinheit 1 zum einen natürlich eine größere Baugröße. Das ist insbesondere nachteilig, wenn man bedenkt, dass die Drahtformungseinheit 1 vorzugsweise im Bereich des Schweißbrenners oder sogar im Schweißbrenner angeordnet werden soll, wie nachfolgend noch ausgeführt wird. Durch den größeren Winkel $\alpha2$ zwischen einer äußeren Rolle 4a, 4c und der Längsrichtung x wäre aber, für einen vorgegebenen Kanal 2, zwangsweise auch wieder eine größere Umlenkung an den beiden äußeren Rolle 4a, 4c erforderlich, um den Draht in Längsrichtung x weiter zu fördern. Damit wird auch die Gegenkrümmung des Schweißdrahtes 3 am ersten und dritten Umlenkpunkt 7a, 7c (Gegenkrümmungsradius R1 in Fig.3) größer, was wiederum zu einer plastischen Verformung des Schweißdrahtes 3 führen kann, die die angestrebte Dressur des Schweißdrahtes 3 durch die plastische Verformung an der mittleren Rolle 4b wieder zur Gänze oder teilweise zunichtemachen kann. Die gewünschte plastische Verformung des Schweißdrahtes 3 zum Einprägen der Dressur erfolgt somit an der mittleren Rolle 4b durch deren Querversatz V gegenüber den beiden äußeren Rollen 4a, 4c. An den beiden äußeren Rollen 4a, 4c sollte durch die Gegenkrümmung keine plastische Verformung, zumindest keine zu hohe plastische Verformung, des Schweißdrahtes 3 erfolgen. Deshalb sollte der Gegenkrümmungsradius R1 nicht zu klein werden, um eine weitere plastische Verformung des Schweißdrahtes 3 zu verhindern, oder zumindest ausreichend zu begrenzen. Hierbei hat es sich als vorteilhaft erwiesen, wenn der Gegenkrümmungsradius R1 mindestens das Doppelte des Krümmungsradius R ist, was zu einer Gegenverformung von maximal 50% der Verformung durch den Querversatz V führen würde. Auf diese Weise dominiert die plastische Verformung an der mittleren Rolle 4b und die erzielte Dressur kann kontrolliert werden.

Die Drahtformungseinheit 1 des erfindungsgemäßen Verfahrens umfasst damit einen Verformungsbereich an der mittleren Rolle 4b, um dem Schweißdraht 3 durch den Querversatz V durch plastische Verformung eine Krümmung (Dressur) in eine definierte Richtung zu geben. Ferner umfasst die Drahtformungseinheit 1 zwei Gegenverformungsbereiche an den beiden äußeren Rollen 4a, 4c, an denen der Schweißdraht 3 durch die Führung im Kanal 2 umgelenkt wird und eine entgegengesetzte Gegenverformung erfährt. Diese kann elastisch oder plastisch sein, wobei im Falle einer plastischen Verformung die Gegenverformung maximale 50% der Verformung an der mittleren Rolle 4b ausmacht.

Das kann an einem einfachen Beispiel erläutert werden. Es wird von einem Kanal 2 mit einer Kanalbreite b=5mm (strichliert angedeutet in Fig.3) ausgegangen. Ein Schweißdraht 3 mit einem Schweißdrahtdurchmesser d=1mm soll in der Drahtformungseinheit 1 eine plastische Verformung (Dehnung) von $\varepsilon$=1% erfahren. Die Dehnung ist bekanntermaßen das Verhältnis des Radius des Schweißdrahtes 3 zum Krümmungsradius

$$R \left( \varepsilon = \frac{d/2}{R} \right)$$

.Damit wird ein Krümmungsradius R von 50mm benötigt. Bei einem Achsabstand A1=20mm wäre ein Querversatz V1=1,01mm erforderlich, um diesen Krümmungsradius R einzustellen, was zu einem Winkel $\alpha1$=11,5° führt. Für den vorgegebenen Kanal 2 würde sich ein Gegenkrümmungsradius R1=148mm ergeben, was zu einer Gegenverformung von $\varepsilon1$=0,34% führen würde. Die Gegenverformung ist damit deutlich kleiner als die Verformung durch den Querversetz V1, wodurch die plastische Verformung des Schweißdrahtes 3 durch die notwendige Gegenverformung in ausreichendem Maße erhalten bliebe. Würde man für diesen Schweißdraht 3 in diesem Beispiel den Achsabstand auf A2=30mm erhöhen, so wäre für einen Krümmungsradius R=50mm ein Querversatz V2=2,3mm erforderlich und es ergäbe sich ein Winkel $\alpha2$=17,4°. Für den vorgegebenen Kanal 2 ergäbe sich allerdings ein Gegenkrümmungsradius R1=37mm, was zu einer Gegenverfor-

mung $\varepsilon_1$=1,35% führen würde. Die Gegenverformung wäre folglich deutlich größer als die Verformung durch den Querversatz V2, was die angestrebte Dressur wieder zunichtemachen würde. Dem könnte man durch eine Vergrößerung des Kanals 2 entgegenwirken, was aber wiederum nachteilig für die Baugröße der Drahtformungseinheit 1 und beim Einfädeln des Schweißdrahtes 3 sein kann. Wird in diesem Beispiel der Achsabstand verkleinert, beispielsweise auf A=10mm, so würde der notwendige Querversatz V kleiner werden und es wäre auch die Gegenverformung $\varepsilon_1$=0,07% wesentlich kleiner, als die Verformung $\varepsilon$ durch den Querversatz.

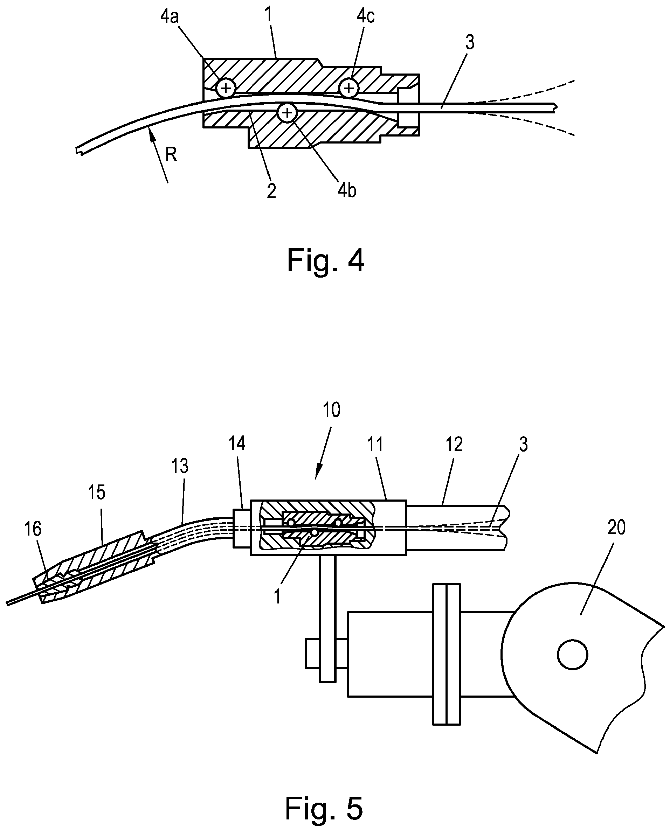

Das Ergebnis der Dressur in der Drahtformungseinheit 1 ist in Fig.4 dargestellt. Ein Schweißdraht 3 der der Drahtformungseinheit 1 in einer beliebigen, undefinierten Dressur und Orientierung (angedeutete durch die strichlierte Linien) zugeführt wird, wird in der Drahtformungseinheit 1 plastisch verformt, sodass der Schweißdraht 3 die Drahtformungseinheit 1 mit einer definierten Dressur (Krümmungsradius R) verlässt. Zusätzlich wird durch die definierte Verformung in der Drahtformungseinheit 1 auch die Orientierung des Schweißdrahtes 3 relativ zur Drahtformungseinheit 1 festgelegt. Hier ist anzumerken, dass die eingeprägte Dressur des Scheißdrahtes 3 auch bei Weiterförderung erhalten bleibt, solange der Schweißdraht 3 keiner weiteren plastischen Verformungen unterworfen wird. Wird der Schweißdraht 3 bei Weiterförderung lediglich elastisch verformt, ändert das nichts an seiner Dressur.

Die Kugellagerung der Rollen 4a, 4b, 4c ist wiederum wichtig, um die Reibkräfte in der Drahtformungseinheit 1 weitestgehend zu minimieren. Eine Gleitlagerung wäre zwar denkbar, aber würde die Reibkräfte deutlich erhöhen. Niedrige Reibkräfte sind wichtig, weil damit die Vorschubkräfte für den Schweißdraht 3 niedrig sind oder bei gleichbleibenden Vorschubkräften die Dynamik der Schweißdrahtförderung erhöht werden kann. Bei bestimmten Schweißverfahren wird der Schweißdraht 3 nicht kontinuierlich der Schweißstelle zugeführt, sondern pulsförmig. Zudem gibt es auch Schweißprozesses, bei denen der Schweißdraht 3 mit einer bestimmten Frequenz vor und zurück bewegt wird. Hierbei sind Drahtvorschubsänderungen mit Frequenzen bis zu 300 Hz typisch. Niedrige Reibungskräfte in der Drahtformungseinheit 1 ermöglichen solche hochdynamische Schweißdrahtzuführungen.

Beim Einsatz der Drahtformungseinheit 1 ist es erfindungsgemäß wesentlich, dass die Drahtformungseinheit 1 in einer definierten und fixierten Einbaulage zum Schweißbrenner 10 ausgerichtet ist, wie anhand der Fig.5 erläutert wird. Das soll sicherstellen, dass es zu keiner unkontrollierten Verformung, insbesondere plastischen Verformung, des Schweißdrahtes 3 durch die Führung des Schweißdrahtes 3 im Schweißbrenner 10 kommen kann. Die Drahtformungseinheit 1 wird daher vorzugsweise positionsfixiert im Schweißbrenner 10 angeordnet. Damit kann es nach der Drahtformungseinheit 1 zu keiner unkontrollierten Verformung mehr kommen.

Der Schweißbrenner 10 umfasst üblicherweise einen Brennergrundkörper 11, an den ein Schlauchpaket 12 angeschlossen wird. Durch das Schlauchpaket 12 werden dem Schweißbrenner 10 sämtliche benötigten Medien, beispielsweise Schutzgas, Kühlmittel, Schweißdraht 3, usw., und Leitungen, beispielsweise elektrischer Schweißstrom, Steuerleitungen zwischen Schweißbrenner 10 und Schweißstromquelle (nicht dargestellt), usw., zugeführt. Am anderen Ende des Brennergrundkörpers 11 ist über ein Kontaktstück 14 ein Brennerhals 13 angeordnet, an dessen axialem Ende ein Brennerkopf 15 angeordnet ist, in dem wiederum eine Kontakthülse 16 (häufig auch Kontaktrohr oder Stromdüse genannt) angeordnet ist. Das Schlauchpaket 12 könnte aber auch direkt an das Anschlussstück 14 angeschlossen werden, womit der Brennergrundkörper 11 auch entfallen könnte. Die Kontakthülse 16 ist in bekannter Weise auf ein elektrisches Potential gehalten, sodass bei Kontaktierung der Kontakthülse 16 durch den Schweißdraht 3 ein elektrischer Schweißstrom durch den Schweißdraht 3 fließen kann. Der Schweißdraht 3 wird über das Schlauchpaket zugeführt und wird durch den Brennerhals 13 in die Kontakthülse 16 geleitet. Im Brennergrundkörper 11 kann auch eine Drahtvorschubeinheit vorgesehen sein, um den Schweißdraht 3 durch den Schweißbrenner 10 zu fördern. Der Brennergrundkörper 11 kann dazu auch als Drahtvorschubeinheit ausgeführt sein. Die Drahtvorschubeinheit kann aber auch an einer anderen Stelle vorgesehen sein. Der Schweißbrenner 10 kann als handgeführter Schweißbrenner 10 ausgeführt sein, oder als Schweißbrenner 10 für einen Schweißroboter 20, wie in Fig.5 angedeutet.

Durch die Drahtformungseinheit 1 wird sichergestellt, dass der Schweißdraht 3 eine definierte, benötigte Dressur (Krümmungsradius) erhält. Durch die definierte und fixierte Einbaulage relativ zum Schweißbrenner 10 wird wiederum sichergestellt, dass der Schweißdraht 3 relativ zum Schweißbrenner 10 in einer definierten Orientierung (Richtung der Krümmung) vorliegt. Diese Dressur wirkt wie eine Vorspannung des Schweißdrahtes 3, sodass durch den festgelegten Krümmungsradius R und die festgelegte Orientierung sichergestellt werden kann, dass der Schweißdraht die Kontakthülse 16 immer an der im Wesentlichen selben Kontaktstelle mit der im Wesentlichen selben Kontaktkraft kontaktiert. Durch die Einstellung des Querversatzes V in der Drahtformungseinheit 1 kann auf die Kontaktstelle auch in gewissen Grenzen Einfluss genommen werden. Dabei kann der Krümmungsradius R durch den Querversatz V der mittleren Rolle 4b in der Drahtformungseinheit 1 wie oben beschrieben vorgegeben oder eingestellt werden. Die Orientierung ergibt sich durch die definierte Einbaulage der Drahtformungseinheit 1 im Schweißbrenner 10.

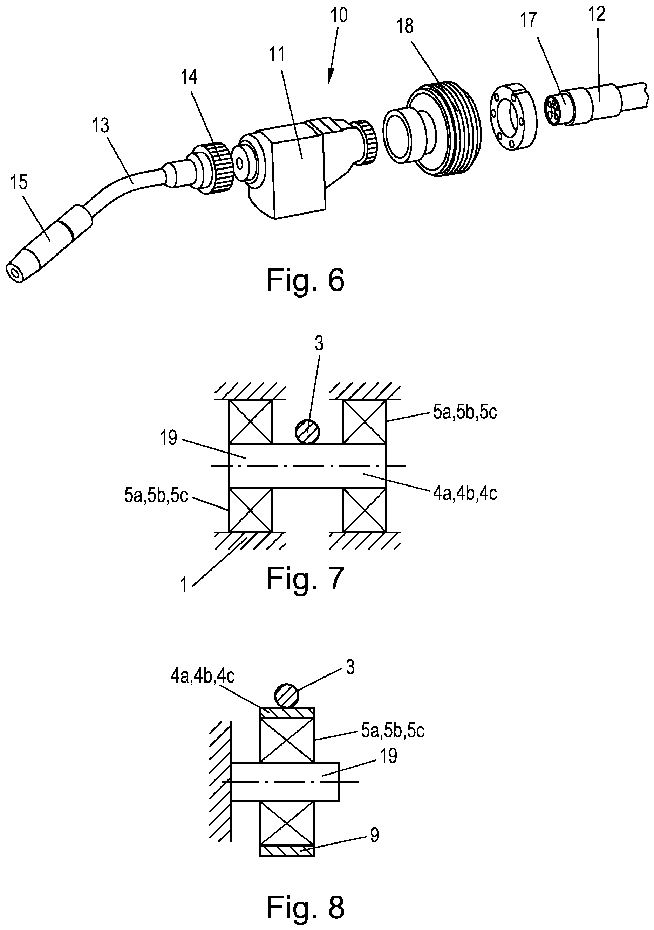

Die Drahtformungseinheit 1 kann im Schweißbrenner 10 an verschiedenen Stellen eingebaut werden, wie anhand von Fig.6 erläutert wird. Eine Möglichkeit ist die Anordnung im Brennergrundkörper 11 (Fig.5), oder in einer Drahtvorschubeinheit, falls der Brennergrundkörper 11 als Drahtvorschubeinheit ausgeführt ist. Die Drahtformungseinheit 1 kann aber auch im Anschlussstück 14, also in der Verbindung zwischen Brennergrundkörper 11 und Brennerhals 13 angeordnet werden. Ebenso kann die Drahtformungseinheit 1 im Brennerhals 13 oder dem Brennerkopf 15 zwischen dem Anschlussstück 14 und der Kontakthülse 16 angeordnet werden. Ist der Schweißbrenner 10 wie in Fig.6 dargestellt mit einem Brennergrundkörper 11 in Form einer Drahtvorschubeinheit ausgestattet, ist auch eine Anordnung der Drahtformungseinheit 1 in der Drahtvorschubeinheit selbst möglich. Auch eine Anordnung in einem Roboterverbindungsstück 18 zum Anschluss des Schweißbrenners 10 an einen Schweißroboter 20 wäre denkbar, wenn der Schweißbrenner 10 an einem Schweißroboter 20 verwendet wird. Nicht zuletzt könnte die Drahtformungseinheit 1 auch in einer Schlauchpaketkupplung 17 angeordnet werden, mit der das Schlauchpaket 12 mit dem Schweißbrenner 10 verbunden wird. In diesem Fall ist es aber wichtig, dass die Drahtformungseinheit 1 jedenfalls vor dem Beginn des flexiblen Abschnittes des Schlauchpakets 12 angeordnet wird, um eine definierte fixierte Einbaulage zum Schweißbrenner 10 sicherzustellen. Grundsätzlich kann die Drahtformungseinheit 1 an jeder beliebigen Stelle des Schweißbrenners 10 angeordnet werden, die den Einbau aufgrund des verfügbaren Einbauplatzes zulässt. Dazu ist eine möglichst kleine Baugröße der Drahtformungseinheit 1 natürlich vorteilhaft, was ebenfalls durch den geringen Achsabstand A möglich wird.

Um die Drahtformungseinheit 1 möglichst kompakt bauen zu können, kann auch vorgesehen sein, eine Rolle 4a, 4b, 4c, vorzugsweise alle Rollen 4a, 4b, 4c, an zwei Kugellagern 5a, 5b, 5c zu lagern, wie in Fig.7 dargestellt. Dazu könnte die Rolle 4a, 4b, 4c als Stift 19 ausgeführt sein, der in den Innenringen zweier benachbarter Kugellager 5a, 5b, 5c drehbar gelagert angeordnet ist. Über die Außenringe der Kugellager 5a, 5b, 5c wird die Rolle 4a, 4b, 4c in der Drahtformungseinheit 1 angeordnet. Damit können Lagerkräfte halbiert werden und kleinere Kugellager 5a, 5b, 5c eingesetzt werden. Eine Rolle 4a, 4b, 4c kann dabei natürlich auch eine Umfangsnut, beispielsweise eine über den Umfang verlaufende V-förmige oder kreisbogenförmige Einkerbung, aufweisen, um den Schweißdraht 3 an der Rolle 4a, 4b, 4c besser führen zu können. Bei Verwendung nur eines Kugellagers 5a, 5b, 5c kann der Außenring eines Kugellagers 5a, 5b, 5c auch direkt als Rolle 4a, 4b, 4c fungieren (Fig.8). Hierzu wäre das Kugellager 5a, 5b, 5c in der Drahtformungseinheit 1 beispielsweise über den Innenring und einen Stift 19 fixiert. Gleichfalls könnte am Außenring eines Kugellagers 5a, 5b, 5c eine Laufhülse 9 angeordnet sein, die als Rolle 4a, 4b, 4c dient (Fig.8).

**Patentansprüche**

1. Verfahren zum Zuführen eines Schweißdrahtes in einen Schweißbrenner mit Kontakthülse (16), wobei der Schweißdraht (3) durch den Schweißbrenner (10) und die Kontakthülse (16) geführt wird, und die Kontakthülse (16) vom Schweißdraht (3) kontaktiert wird, und im Schweißbrenner (10) vor der Kontakthülse (16) eine Drahtformungseinheit (1) angeordnet wird, durch die der Schweißdraht (3) geführt wird, wobei die Drahtformungseinheit (1) im Schweißbrenner (10) in einer definierten und fixierten Einbaulage relativ zum Schweißbrenner (10) angeordnet wird und wobei der Schweißdraht (3) in der Drahtformungseinheit (1) über drei in Längsrichtung (x) des Schweißbrenners (10) hintereinander angeordnete, kugelgelagerte Rollen (4a, 4b, 4c) geführt wird, wobei die in Längsrichtung (x) gesehene mittlere Rolle (4b) in der Drahtformungseinheit (1) gegenüber den beiden in Längsrichtung (x) gesehen äußeren Rollen (4a, 4c) um einen Querversatz (V) in einer Querrichtung (y) quer zur Längsrichtung (x) versetzt wird, um einen zickzack-förmigen Pfad für den Schweißdraht (3) durch die Drahtformungseinheit (1) auszubilden, wobei die beiden äußeren Rollen (4a, 4c) in Längsrichtung (x) gesehen in einem Achsabstand (A) von maximal 20mm angeordnet werden, sodass der Schweißdraht (3) die Drahtformungseinheit (1) mit einer definierten Dressur (Krümmungsradius R) verlässt, wobei die Dressur wie eine Vorspannung des Schweißdrahtes (3) wirkt, sodass durch den festgelegten Krümmungsradius (R) und die festgelegte Orientierung sichergestellt wird, dass der Schweißdraht die Kontakthülse (16) immer an der im Wesentlichen selben Kontaktstelle mit der im Wesentlichen selben Kontaktkraft kontaktiert.

2. Verfahren nach Anspruch 1, **dadurch gekennzeichnet, dass** die Drahtformungseinheit (1) in einem Brennergrundkörper (11) des Schweißbrenners (10) angeordnet wird.

3. Verfahren nach Anspruch 2, **dadurch gekennzeichnet, dass** der Brennergrundkörper (11) des Schweißbrenners (10) eine Drahtvorschubeinheit umfasst oder als Drahtvorschubeinheit ausgeführt wird und die Drahtformungseinheit (1) in der Drahtvorschubeinheit angeordnet wird.

4. Verfahren nach Anspruch 1, **dadurch gekennzeichnet, dass** der Querversatz (V) abhängig vom Schweißdraht (3), vorzugsweise abhängig vom Schweißdrahtdurchmesser und/oder Schweißdrahtmaterial, eingestellt wird.

**Claims**

1. A method for feeding a welding wire into a welding torch (10) having a contact sleeve (16), whereas the welding wire (3) being passed through the welding torch (10) and the contact sleeve (16), and the contact sleeve (16) being contacted by the welding wire (3), and a wire forming unit (1) being arranged in the welding torch (10) upstream of the contact sleeve (16), through which wire forming unit the welding wire (3) is passed, whereas the wire forming unit (1) being arranged in the welding torch (10) in a defined and fixed installation position relative to the welding torch (10) and whereas the welding wire (3) is led over three ball bearing-mounted rollers (4a, 4b, 4c) arranged one behind the other in the longitudinal direction (x) of the welding torch (10) in the wire forming unit (1), whereas the central roller (4b), when viewed in the longitudinal direction (x), is offset in the wire-forming unit (1) relative to the two outer rollers (4a, 4c), when viewed in the longitudinal direction (x), by a transverse offset (V) in a transverse direction (y) transverse to the longitudinal direction (x) in order to form a zig-zag-shaped path for the welding wire (3) through the wire forming unit (1), whereas the two outer rollers (4a, 4c), when viewed in the longitudinal direction (x), are arranged at an axial distance (A) of maximally 20 mm, so that the welding wire (3) leaves the wire-forming unit (1) with a defined bend (direction of curvature), whereas the bend acts like a pretensioning of the welding wire (3) such that it is ensured by the defined curvature radius (R) and the defined orientation, that the welding wire contacts the contact sleeve (16) always at the substantially same contact point with the substantially same contact force.

2. The method according to claim 1, **characterized in that** the wire forming unit (1) is arranged in a torch base (11) of the welding torch (10).

3. The method according to claim 2, **characterized in that** the torch base (11) comprises a wire feed unit or is designed as a wire feed unit and **in that** the wire forming unit (1) is arranged in the wire feed unit.

4. The method according to claim 1, **characterized in that** the transverse offset (V) is adjusted depending on the welding wire (3), preferably depending on the welding wire diameter and/or the welding wire material

**Revendications**

1. Procédé permettant d'acheminer un fil de soudage dans un chalumeau de soudage comportant une douille de contact (16), le fil de soudage (3) étant guidé à travers le chalumeau de soudage (10) et la douille de contact (16), et la douille de contact (16) étant mise en contact avec le fil de soudage (3), et une unité de formage de fil (1) étant disposée dans le chalumeau de soudage (10) devant la douille de contact (16), le fil de soudage (3) étant guidé à travers ladite unité de formage de fil, l'unité de formage de fil (1) étant disposée dans le chalumeau de soudage (10) dans une position de montage définie et fixe par rapport au chalumeau de soudage (10) et le fil de soudage (3) étant guidé dans l'unité de formage de fil (1) par l'intermédiaire de trois rouleaux (4a, 4b, 4c) disposés les uns derrière les autres dans la direction longitudinale (x) du chalumeau de soudage (10) et montés sur des roulements à billes, le rouleau central (4b), vu dans la direction longitudinale (x), étant décalé dans l'unité de formage de fil (1) par rapport aux deux rouleaux extérieurs (4a, 4c), vus dans la direction longitudinale (x), d'un décalage transversal (V) dans une direction transversale (y) transversalement par rapport à la direction longitudinale (x) afin de former un chemin en zigzag pour le fil de soudage (3) à travers l'unité de formage de fil (1), les deux rouleaux extérieurs (4a, 4c), vus dans la direction longitudinale (x), étant disposés à une distance axiale (A) de 20 mm maximum, de sorte que le fil de soudage (3) quitte l'unité de formage de fil (1) avec un dressage défini (rayon de courbure R), le dressage agissant comme une précontrainte du fil de soudage (3), de sorte que le rayon de courbure (R) déterminé et l'orientation déterminée garantissent que le fil de soudage entre toujours en contact avec la douille de contact (16) sensiblement au même point de contact et avec sensiblement la même force de contact.

2. Procédé selon la revendication 1, **caractérisé en ce que** l'unité de formage de fil (1) est disposée dans un corps de base de chalumeau (11) du chalumeau de soudage (10).

3. Procédé selon la revendication 2, **caractérisé en ce que** le corps de base de chalumeau (11) du chalumeau de soudage (10) comprend une unité d'avance de fil ou est réalisé sous la forme d'une unité d'avance de fil et l'unité de formage de fil (1) est disposée dans l'unité d'avance de fil.

4. Procédé selon la revendication 1, **caractérisé en ce que** le décalage transversal (V) est réglé en fonction du fil de soudage (3), de préférence en fonction du diamètre de fil de soudage et/ou du matériau de fil de soudage.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1923995 A1
- US 4074105 A
- DE 29880112 U1

- US 20090152255 A1
- EP 3088117 A1
- JP H11342471 A